# EUROPÄISCHE PATENTSCHRIFT

(11) **EP 2 469 143 B1**
(45) Veröffentlichungstag und Bekanntmachung des Hinweises auf die Patenterteilung: **29.05.2013**
(21) Anmeldenummer: 10306467.1
(22) Anmeldetag: 21.12.2010
(51) Int. Cl.: F16L 25/00, F16L 33/24, F16L 33/26, H01P 1/04, H02G 3/06

(54) **Kupplungsanordnung, umfassend einen Kupplungskörper und ein metallisches Rohr sowie Verfahren zur Montage des Kupplungskörpers**
Coupling arrangement comprising a coupling body and a metallic pipe and method for mounting the coupling body
Agencement de raccord comprenant un corps de raccord et un tuyau métallique et procédé de montage du corps de raccord

(43) Veröffentlichungstag der Anmeldung: 27.06.2012
(73) Patentinhaber: Nexans, 75008 Paris (FR)
(72) Erfinder: Di Palma, Michele, 31832 Springe (DE); Lange, Stephan, 30900 Wedemark (DE); Schippl, Klaus, Dipl.-Ing., 30659 Hannover (DE); Frohne, Christian, Dr.-Ing., 30657 Hannover (DE)
(74) Vertreter: Döring, Roger

(56) Entgegenhaltungen:
- EP-A1- 0 775 865
- DE-A1- 2 126 871
- DE-A1- 3 800 150
- DE-U- 1 897 704
- FR-A1- 2 241 741

## Beschreibung

Die Erfindung bezieht sich auf eine Kupplungsanordnung, umfassend einen Kupplungskörper und ein schraubenlinienförmig gewelltes metallisches Rohr, das eine entlang eines Schraubengangs seiner Wellung verlaufende Stirnfläche hat, sowie auf ein Verfahren zur Montage des Kupplungskörpers.

Eine entsprechende Kupplungsanordnung geht beispielsweise aus der FR 2 241 741 A1 hervor.

Quer zu ihrer Längsrichtung gewellte metallische Rohre sind seit langem bekannt. Sie werden beispielsweise als elektrische Leiter von Hochfrequenz-Kabeln, als Umhüllung für elektrische und optische Kabel, in Kryostaten für supraleitfähige Kabel oder zum Transport von flüssigen oder gasförmigen Medien eingesetzt. Wegen des wellenförmigen Verlaufs des Rohres sind zu seiner Weiterverbindung spezielle Anschlüsse erforderlich. Solche Anschlüsse sind bei ringförmig gewellten Rohren noch relativ einfach aufgebaut. Schwieriger ist das bei schraubenlinienförmig gewellten Rohren, weil bei einem Radialschnitt durch ein solches Rohr zusätzlich eine exzentrisch zur Mittelachse des Rohres liegende, gegebenenfalls unrunde Stirnfläche entsteht.

Bei der bekannten Kupplungsanordnung nach der DE-C-21 26 871 ist auf das Ende eines schraubenlinienförmig gewellten Rohres ein Haltering aufgeschraubt, der in Montageposition an einer radial nach außen gebogenen, entlang eines Schraubengangs verlaufenden Bördelkante des Rohres anliegt. Auf den Haltering ist eine Armatur aufgesteckt, die in eine einem Schraubengang des Rohres bzw. dem Verlauf der Bördelkante entsprechende Anlagefläche hat, welche in Montageposition an der Bördelkante anliegt. Dieser Kupplungskörper ist aufwendig gestaltet und für einen stabilen Anschluß von weiterführenden Bauteilen nicht geeignet. Er ragt außerdem in radialer Richtung weit über das Rohr hinaus, so daß er insbesondere an räumlich engen Montageorten nicht eingesetzt werden kann.

Aus der bereits genannten FR 2 241 741 A1 geht eine Kupplungsanordnung zwischen einem flexiblen, schraubenlinienförmig gewellten metallischen Rohr und einem starren Rohrstück hervor. Das Rohrstück ist an seinem einen Ende mit einer Wellung versehen, welche mit geringem Untermaß der Wellung des Rohres entspricht. In Montageposition ist das Rohrstück mit dem Bereich der Wellung in das Rohr eingeschraubt. Beide Teile sind beispielsweise durch Löten fest miteinander verbunden.

Der Erfindung liegt die Aufgabe zugrunde, die eingangs geschilderte Kupplungsanordnung so zu gestalten, daß der Kupplungskörper mit stabilem Festsitz an einem schraubenlinienförmig gewellten Rohr angebracht werden kann und in radialer Richtung nicht über die Abmessungen des Rohres hinausragt.

Diese Aufgabe wird entsprechend der Gesamtheit der Merkmale des Patentanspruchs 1 gelöst.

Zur Montage des Kupplungskörpers werden gemäß der Erfindung folgende Verfahrensschritte durchgeführt:
a) Das Rohr wird an einem Ende entlang eines Schraubengangs aufgetrennt, mit einem den Anfang und das Ende des Schraubengangs nach einem Umlauf verbindenden Schnitt in axialer Richtung;
b) In das Rohr wird ein mit einer Wellung versehenes metallisches Rohrstück eingeschraubt, das einen an seiner äußeren Umfangsfläche mit einer schraubenlinienförmig verlaufenden Kontur versehenen Befestigungsteil und einen glatten zylindrischen Anschlußteil hat, der in Montageposition aus dem Rohr herausragt;
c) Auf das Anschlußteil wird ein metallischer Haltering aufgeschoben, der eine einem Schraubengang des Rohres entsprechende, entlang einer Schraubenlinie verlaufende Stirnfläche hat;
d) Auf dem Ende des Anschlußteils wird eine metallische Hülse befestigt;
e) Der Haltering wird mittels Druckelementen, die zwischen demselben und der Hülse angeordnet werden, mit seiner schraubenlinienförmig verlaufenden Stirnfläche an die Stirnfläche des Rohres angedrückt und in dieser Position fest mit dem Anschlußteil des Rohrstücks verbunden.

Das Rohrstück des Kupplungskörpers dieser Kupplungsanordnung ist mit seinem Befestigungsteil in das schraubenlinienförmig gewellte Rohr eingeschraubt. Es liegt also innerhalb des Rohres und ragt daher nicht in radialer Richtung über dasselbe hinaus. Das gilt auch für seinen Anschlußteil, der in Montageposition zum Anschließen weiterführender Bauteile in axialer Richtung aus dem Rohr herausragt, und für den Haltering, dessen Außendurchmesser etwa dem Außendurchmesser des Rohres entspricht. Der Außendurchmesser des Halterings ist mit Vorteil geringfügig kleiner als der Außendurchmesser des Rohres. Der Befestigungsteil des Rohrstücks ist außerdem durch den Haltering mit stabiler Lage im Rohr befestigt, welcher rundum fest und dicht an der Stirnfläche des Rohres anliegt. Durch den Haltering, welcher bei seiner Montage und vor seiner Festlegung am Anschlußteil durch die Druckelemente gegen die Stirnfläche des Rohres gedrückt wird, werden außerdem die Flanken des Gewindes des Befestigungsteils gegen die Wandung der korrespondierenden Wellung des Rohres gedrückt, wodurch der Festsitz des Befestigungsteils im Rohr unterstützt ist.

Mit besonderem Vorteil wird das gewellte Rohr an seinem Ende im Bereich der Kuppe eines nach außen weisenden, als Schraubengang verlaufenden Wellenberges entlang dieses Schraubengangs geschnitten, mit einem die Steigung des Schraubengangs überbrückenden Schnitt in axialer Richtung. Es ergibt sich dann für die Stirnfläche des Rohres eine große Anlagefläche für den Haltering. Sie ist dann am größten, wenn das Rohr genau entlang der Kuppe eines Wellenbergs aufgetrennt wird.

Ein Ausführungsbeispiel des Erfindungsgegenstandes ist in den Zeichnungen dargestellt.

Es zeigen:
Fig. 1 in schematischer Darstellung das Ende eines schraubenlinienförmig gewellten metallischen Rohres mit daran angebrachtem Kupplungskörper.
Fig. 2 eine Seitenansicht des in der Kupplungsanordnung nach der Erfindung eingesetzten Kupplungskörpers.
Fig. 3 einen Schnitt durch das mit dem Kupplungskörper bestückte Rohr nach Fig. 1.

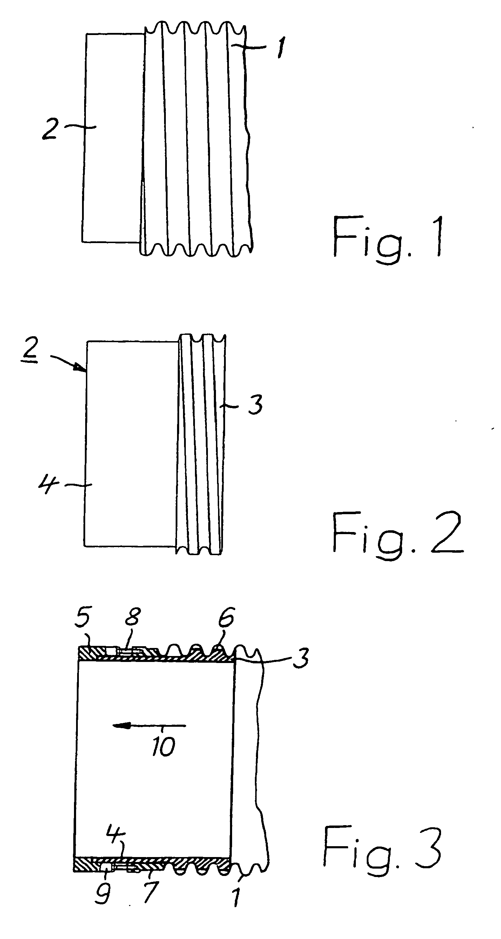

In Fig. 1 ist das Ende eines metallischen Rohres 1 dargestellt, das mit einer quer zu seiner Achse entlang einer Schraubenlinie verlaufenden Wellung versehen ist. Das Rohr 1 besteht mit Vorteil aus Stahl, insbesondere Edelstahl, oder Kupfer. In bzw. an dem Rohr 1 ist ein Kupplungskörper 2 befestigt, der zum Anschluß weiterführender Bauteile dient. Er hat eine zylindrische Umfangsfläche und an seinem aus dem Rohr 1 herausragenden Ende eine im rechten Winkel zu seiner Achse verlaufende Stirnfläche.

Der Kupplungskörper 2 besteht aus Metall, insbesondere aus Edelstahl. Er ist als Rohrstück ausgeführt und hat entsprechend Fig. 2 an seinem einen axialen Ende einen mit einem Außengewinde versehenen Befestigungsteil 3. Das Außengewinde desselben entspricht dem schraubenlinienförmigen Verlauf der Wellung des Rohres 1. Auf der dem Befestigungsteil 3 abgewandten Seite hat das Rohrstück des Kupplungskörpers 2 einen glatten, zylindrischen Anschlußteil 4. An dessen Ende ist im Montagezustand bei in das Rohr 1 eingeschraubtem Kupplungskörper 2 eine metallische Hülse 5 befestigt, beispielsweise durch Schweißen oder Löten.

Der Kupplungskörper 2 wird beispielsweise wie folgt am bzw. im Ende des Rohres 1 montiert:

Das Rohr 1 wird an seinem Ende im Bereich der Kuppe eines nach außen weisenden Wellenbergs abgeschnitten, so daß sich eine in der Draufsicht kreisförmige, entlang eines Schraubengangs verlaufende Stirnfläche als Anlagefläche für ein entsprechendes Teil des Kupplungskörpers 2 ergibt. Mit Vorteil erfolgt der Schnitt genau in der Kuppe des Wellenbergs. Die Anlagefläche der Stirnfläche hat dann eine maximale Größe.

Anschließend wird das Rohrstück des Kupplungskörpers 2 mit seinem Befestigungsteil 3 so weit in das Rohr 1 eingeschraubt, daß alle seine schraubenförmig verlaufenden Vorsprünge 6 gemäß Fig. 3 in die Wellung des Rohres 1 eingreifen. Danach liegt der Anschlußteil 4 des Rohrstücks auf einer kurzen axialen Länge an nach innen weisenden Wellentälern des Rohres 1 an. Die wesentliche Länge des Anschlußteils 4 ragt aber in axialer Richtung aus dem Rohr 1 heraus.

Wenn das Rohrstück des Kupplungskörpers 2 seine vorgegebene Position im Rohr 1 erreicht hat, so wie sie beispielsweise in Fig. 3 dargestellt ist, wird auf den Anschlußteil 4 ein metallischer Haltering 7 aufgeschoben, der auf der zur Anlage am Rohr 1 bestimmten Seite eine dem Verlauf der Stirnfläche des Rohres 1 entsprechende, schraubenlinienförmig verlaufende Stirnfläche hat. Er wird mit Vorteil bis zur Anlage an der Stirnfläche des Rohres 1 auf dem Anschlußteil 4 vorgeschoben. Danach wird die metallische Hülse 5 auf das Ende des Anschlußteils 4 aufgebracht und vorzugsweise durch Schweißen oder Löten fest mit demselben verbunden.

Anschließend werden in axialer Richtung verlaufende und wirkende Druckelemente zwischen dem Haltering 7 und der Hülse 5 angebracht, und zwar über den Umfang des Anschlußteils 4 verteilt. Geeignete Druckelemente sind beispielsweise Schrauben 8, die mit ihrem Kopf an der Hülse 5 bzw. entsprechend der Darstellung in Fig. 3 an Distanzstücken 9 anliegen. Die Schrauben 8 werden in Gewindelöcher des Halterings 7 eingeschraubt. Bei einer weitergehenden Drehung der Schrauben 8 wird der Haltering 7 gegen die Stirnfläche des Rohres 1 gedrückt, und zwar so lange, bis eine gewünschte Anpreßkraft erreicht ist. In dieser Position wird der Haltering 7 mit dem Anschlußteil 4 fest verbunden, vorzugsweise durch Schweißen oder Löten.

Beim Andrücken des Halterings 7 an die Stirnfläche des Rohres 1 wird gleichzeitig das Rohrstück insgesamt in axialer Richtung belastet, weil die Schrauben 8 gegen die Distanzstücke 9 und damit gegen die Hülse 5 abgestützt sind. Dadurch werden die Flanken des durch die Vorsprünge 6 gebildeten Gewindes des Befestigungsteils 3 des Rohrstücks in Richtung des Pfeiles 10 gegen die Wandung der korrespondierenden Wellung des Rohres 1 gedrückt. Es ist dadurch zusätzlich ein Festsitz auch zwischen dem Rohrstück 3 und dem Rohr 1 erreicht.

Mit Vorteil kann der Haltering 7 in seiner Endposition auch mit dem Rohr 1 verschweißt oder verlötet werden, so daß eine feste und dichte Verbindung zwischen beiden Teilen hergestellt ist.

Da die Schrauben 8 am fertig montierten Kupplungskörper 2 nicht mehr benötigt werden, können sie abschließend entfernt werden. Dazu werden zunächst die Distanzstücke 9 herausgenommen, so daß Platz für die Schrauben 8 geschaffen ist. Anschließend werden die Schrauben 8 soweit zurückgedreht, bis sie nicht mehr in die Gewindelöcher des Halterings 7 eingreifen. Sie können dann problemlos entfernt werden.

## Patentansprüche

1. Kupplungsanordnung, umfassend einen Kupplungskörper (2) und ein schraubenlinienförmig gewelltes metallisches Rohr (1), das eine entlang eines Schraubengangs seiner Wellung verlaufende Stirnfläche hat, welcher Kupplungsköper (2) ein aus Metall bestehendes Rohrstück aufweist, das eine sich in seiner axialen Richtung erstreckende, dem Schraubengang der Wellung des Rohres entsprechende, schraubenlinienförmig verlaufende Kontur hat und in Montageposition unter Eingriff in die Wellung des Rohres an demselben anliegt, bei welcher das Rohrstück einen Befestigungsteil (3) und einen einteilig mit demselben verbundenen Anschlußteil (4) aufweist, bei welcher die schraubenlinienförmig verlaufende Kontur auf der äußeren Mantelfläche des Befestigungsteils (3) angebracht ist, der in Montageposition in das Rohr (1) eingeschraubt ist, bei welcher der Außendurchmesser des zylindrisch und mit glatter äußerer Umfangsfläche ausgeführten Anschlußteils (4) dem Innendurchmesser des Rohres (1) entspricht, bei welcher der Anschlußteil (4) in Montageposition in axialer Richtung aus dem Rohr (1) herausragt, und bei welcher auf dem Anschlußteil (4) ein an demselben anliegender metallischer Haltering (7) angebracht ist, dessen Außendurchmesser etwa dem Außendurchmesser des Rohres (1) entspricht, dessen dem Rohr (1) zugewandte Stirnfläche entlang eines dem Schraubengang des Rohres entsprechenden Schraubengangs verläuft und der in Montageposition fest und dicht an der Stirnfläche des Rohres anliegend fest mit dem Anschlußteil (4) verbunden ist.

2. Kupplungsanordnung nach Anspruch 1, **dadurch gekennzeichnet, daß** das Rohr (1) zur Bildung seiner entlang eines Schraubengangs der Wellung verlaufenden Stirnfläche im Bereich der Kuppe eines nach außen weisenden Wellenberges mit einem dem Schraubengang entsprechenden Verlauf geschnitten ist.

3. Kupplungsanordnung nach Anspruch 1 oder 2. **dadurch gekennzeichnet daß** der Haltering (7) fest mit dem Rohr (1) verbunden ist.

4. Kupplungsanordnung nach einem der Ansprüche 1 bis 3, **dadurch gekennzeichnet, daß** außen auf dem in Montageposition aus dem Rohr (1) herausragenden Ende des Anschlußteils (4) eine metallische Hülse (5) befestigt ist, deren Außendurchmesser dem Außendurchmesser des Rohres entspricht.

5. Verfahren zum Festlegen eines Kupplungskörpers am Ende eines schraubenlinienförmig gewellten metallischen Rohres, **gekennzeichnet durch** folgende Verfahrensschritte:
a) Das Rohr (1) wird an einem Ende entlang eines Schraubengangs aufgetrennt, mit einem den Anfang und das Ende des Schraubengangs nach einem Umlauf verbindenden Schnitt in axialer Richtung;
b) In das Rohr (1) wird ein mit einer Wellung versehenes Rohrstück eingeschraubt, das einen an seiner äußeren Umfangsfläche mit einer schraubenlinienförmig verlaufenden Kontur versehenen Befestigungsteil (3) und einen glatten zylindrischen Anschlußteil (4) hat, der in Montageposition aus dem Rohr (1) herausragt;
c) Auf das Anschlußteil (4) wird ein metallischer Haltering (7) aufgeschoben, der eine einem Schraubengang des Rohres (1) entsprechende, entlang einer Schraubenlinie verlaufende Stirnfläche hat;
d) Auf dem Ende des Anschlußteils (4) wird eine metallische Hülse (5) befestigt:
e) Der Haltering (7) wird mittels Druckelementen, die zwischen demselben und der Hülse (5) angeordnet werden, mit seiner schraubenlinienförmig verlaufenden Stirnfläche an die Stirnfläche des Rohres angedrückt und in dieser Position fest mit dem Anschlußteil (4) des Rohrstücks verbunden.

6. Verfahren nach Anspruch 5, **dadurch gekennzeichnet, daß** der Haltering (7) mit dem Anschlußteil (4) des Rohrstücks verschweißt oder verlötet wird.

7. Verfahren nach Anspruch 5 oder 6, **dadurch gekennzeichnet, daß** der Haltering (7) mit dem Rohr (1) verschweißt oder verlötet wird.

8. Verfahren nach Anspruch 5, **dadurch gekennzeichnet, daß** die metallische Hülse (5) mit dem Anschlußteil (4) des Rohrstücks verschweißt oder verlötet wird.

## Claims

1. Coupling arrangement, comprising a coupling body and a helically corrugated metal pipe (1) which has an end face extending along a screw thread of its corrugation, which coupling body (2) comprises a metal pipe piece which has a helically shaped contour extending in its axial direction and corresponding to the screw thread of the corrugation of the pipe and which in mounted position abuts to the pipe by protruding in the corrugation of the pipe, wherein the pipe has a fastening part (3) and a connecting part (4) integrally connected with the fastening part, wherein the helically shaped contour is provided on the outer surface of the fastening part (3) which, in mounted position, is screwed into the pipe (1), wherein the outer diameter of the connecting part(4), which is -cylindrically shaped and has a smooth outer circumferential surface, corresponds to the inner diameter of the pipe (1), wherein the connecting part (4) protrudes in mounted position in the axial direction out of the pipe (1) and wherein a metal holding ring (7) is mounted on the connecting part (4) resting against the latter, the outer diameter of which corresponds approximately to the outer diameter of the pipe (1), the end face of the holding ring (7) facing the pipe (1) extends along a screw thread corresponding to the screw thread of the pipe, and the holding ring (7) in the mounted position being fixedly connected to the connecting part (4) thereby resting fixedly and tightly against the end face of the pipe.

2. Coupling arrangement according to claim 1, **characterized in that** for achieving an end face which extends along a screw thread of its corrugation the pipe (1) is c ut in the area of the dome of a crest showing to the outside with an extension according to one screw thread.

3. Coupling arrangement according to claim 1 or 2, **characterized in that** the holding ring (7) is fastened to the pipe (1).

4. Coupling arrangement according to one of the claims 1 to 3, **characterized in that** a metal bushing (5) is fastened at the outside of the end of the connecting part (4) which in mounting position protrudes from the pipe (1), the outer diameter of the bushing corresponds to the outer diameter of the pipe.

5. Method for the fastening of a coupling body at the end of a helically corrugated metal pipe, **characterized by** the following steps:
a) The pipe (1) is cut at one end along screw thread with a connecting cut extending in axial direction between the start and the end ofthe screw thread;
b) A metal pipe piece which has a helically shaped contour is screwed into the pipe (1) which pipe piece comprises a fastening part (3) having an outer surface with a screw like contour and a smooth cylindrical connecting part (4) which in mounting position protrudes out of the pipe (1);
c) A metal holding ring (7) is pushed onto the connecting part (4) which has an end face extending along a screw line corresponding to a screw thread of the pipe (1);
d) A metallic bushing (5) is fixed to the end of the connecting part (4);
e) The holding ring (7) is pressed against the end face of the pipe with its end face extending along a screw thread by pressure elements which are mounted between the holding ring (7) and the bushing (5) and is fixedly connected in this position to the connecting part (4) of the pipe piece.

6. Method according to claim 5, **characterized in that** the holding ring (7) is welded or soldered to the connecting part (4) of the pipe piece.

7. Method according to claim 5 or 6, **characterized in that** the holding ring (7) is welded or soldered to the pipe (1).

8. Method according to claim 5, **characterized in that** the metal bushing (5) is welded or soldered to the connecting part(4)-of the pipe piece.

## Revendications

1. Agencement de raccord comprenant un corps de raccord (2) et un tube métallique (1) ondulé sous forme hélicoïdale, qui présente une surface frontale s'étendant le long d'un pas de vis de son ondulation, lequel corps de raccord (2) présente une pièce tubulaire constituée de métal qui a un contour s'étendant dans sa direction axiale, correspondant au pas de vis de l'ondulation du tube, s'étendant sous forme hélicoïdale, et qui s'applique dans la position de montage contre le tube en s'engageant dans l'ondulation du tube, la pièce tubulaire présentant une partie de fixation (3) et une partie de raccordement (4) connectée d'une seule pièce à celle-ci, le contour s'étendant sous forme hélicoïdale étant prévu sur la surface d'enveloppe extérieure de la partie de fixation (3) qui est vissée dans le tube (1) dans la position de montage, le diamètre extérieur de la partie de raccordement (4) réalisée sous forme cylindrique et avec une surface d'enveloppe extérieure lisse correspondant au diamètre intérieur du tube (1), la partie de raccordement (4) faisant saillie hors du tube (1) dans la direction axiale dans la position de montage, et une bague de retenue (7) métallique s'appliquant contre la partie de raccordement (4) étant montée sur ladite partie de raccordement, son diamètre extérieur correspondant approximativement au diamètre extérieur du tube (1), sa surface frontale tournée vers le tube (1) s'étendant le long d'un pas de vis correspondant au pas de vis du tube, et étant connectée dans la position de montage fixement à la partie de raccordement (4) en s'appliquant fixement et hermétiquement contre la surface frontale du tube.

2. Agencement de raccord selon la revendication 1, **caractérisé en ce que** le tube (1), pour former sa surface frontale s'étendant le long d'un pas de vis de l'ondulation dans la région de la pointe d'un sommet d'ondulation tourné vers l'extérieur, est coupé suivant une courbe correspondant au pas de vis.

3. Agencement de raccord selon la revendication 1 ou 2, **caractérisé en ce que** la bague de retenue (7) est connectée fixement au tube (1).

4. Agencement de raccord selon l'une quelconque des revendications 1 à 3, **caractérisé en ce qu'**à l'extérieur sur l'extrémité de la partie de raccordement (4) faisant saillie hors du tube (1) dans la position de montage, est fixée une douille métallique (5) dont le diamètre extérieur correspond au diamètre extérieur du tube.

5. Procédé pour fixer un corps de raccord à l'extrémité d'un tube métallique ondulé sous forme hélicoïdale, **caractérisé par** les étapes de procédé suivantes :
a) le tube (1) est sectionné à une extrémité le long d'un pas de vis, avec une coupe dans la direction axiale reliant le début et la fin du pas de vis après un tour ;
b) une pièce tubulaire pourvue d'une ondulation est vissée dans le tube (1), laquelle pièce tubulaire a une partie de fixation (3) pourvue au niveau de sa surface périphérique extérieure d'un contour s'étendant sous forme hélicoïdale et une partie de raccordement cylindrique lisse (4), qui fait saillie hors du tube (1) dans la position de montage ;
c) une bague de retenue métallique (7) est enfilée sur la partie de raccordement (4), laquelle bague de retenue a une surface frontale correspondant à un pas de vis du tube (1), s'étendant le long d'une ligne hélicoïdale ;
d) une douille métallique (5) est fixée sur l'extrémité de la partie de raccordement (4) ;
e) la bague de retenue (7) est pressée au moyen d'éléments de pression qui sont disposés entre elle et la douille (5), avec sa surface frontale s'étendant sous forme hélicoïdale, contre la surface frontale du tube et est connectée fixement dans cette position à la partie de raccordement (4) de la pièce tubulaire.

6. Procédé selon la revendication 5, **caractérisé en ce que** la bague de retenue (7) est soudée ou brasée à la partie de raccordement (4) de la pièce tubulaire.

7. Procédé selon la revendication 5 ou 6, **caractérisé en ce que** la bague de retenue (7) est soudée ou brasée au tube (1).

8. Procédé selon la revendication 5, **caractérisé en ce que** la douille métallique (5) est soudée ou brasée à la partie de raccordement (4) de la pièce tubulaire.
